# EUROPÄISCHE PATENTSCHRIFT

(11) **EP 3 964 063 B1**
(45) Veröffentlichungstag und Bekanntmachung des Hinweises auf die Patenterteilung: **07.06.2023**
(21) Anmeldenummer: 20211912.9
(22) Anmeldetag: 04.12.2020
(51) Int. Cl.: A01N 25/10, A01N 25/04, A01N 59/20, A01N 33/12, A01N 43/16, A01P 1/00, C09D 183/08, C09D 183/04, C09D 5/14, B32B 21/06, B32B 29/00, C08G 77/14, C08G 77/00, C08G 77/26, C09D 7/63, C08L 83/08, C08K 5/5415

(54) **ZUSAMMENSETZUNG MIT ANTIMIKROBIELLEN EIGENSCHAFTEN, INSBESONDERE BIOZIDEN EIGENSCHAFTEN, FÜR OBERFLÄCHENBESCHICHTUNGEN AUF TRÄGERMATERIALIEN**
COMPOSITION HAVING ANTIMICROBIAL PROPERTIES, ESPECIALLY BIOCIDAL PROPERTIES, FOR SURFACE COATINGS ON SUBSTRATES
COMPOSITION ANTIMICROBIENNE, EN PARTICULIER BIOCIDE, POUR LE REVÊTEMENT DE LA SURFACE D'UN SUBSTRAT

(30) Priorität: 03.09.2020 EP 20194328
(43) Veröffentlichungstag der Anmeldung: 09.03.2022
(73) Patentinhaber: SWISS KRONO Tec AG, 6004 Luzern (CH)
(72) Erfinder: GIER, Andreas, 66399 Mandelbachtal (DE); HASCH, Joachim, 10317 Berlin (DE); KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 873 523
- WO-A1-02/36701
- CN-A- 108 610 719
- CN-A- 111 138 894
- DE-A1-102005 000 905
- DE-A1-102006 001 641
- DE-A1-102008 051 543

## Beschreibung

Die vorliegende Erfindung betrifft eine Harzsuspension mit antimikrobiellen Eigenschaften, insbesondere bioziden Eigenschaften, für Oberflächenbeschichtungen auf Trägermaterialien, eine Harzsuspension enthaltend diese Zusammensetzung, die Verwendung dieser Zusammensetzung und Harzsuspension sowie damit beschichtete Trägermaterialien, wie Papierlagen oder Holzwerkstoffplatten.

### Beschreibung

In verschiedenen Bereichen werden bei Möbeln, Bodenbelägen und Innenausbau Holzwerkstoffplatten und Elemente mit einer Melaminoberfläche eingesetzt. Sie sind nicht nur dekorativ, sondern besitzen hervorragende Oberflächeneigenschaften. Zusätzlich wird immer häufiger gefordert, dass sie auch bestimmte hygienische Eigenschaften besitzen. Von Melaminoberflächen ist bekannt, dass sie sich leicht und schnell desinfizieren lassen. Auch führt der Einsatz von Desinfektionsmittels typischerweise nicht zu Oberflächenveränderungen. Allerdings besteht dabei oft das Problem, dass die Ausrüstung der Oberfläche lediglich für einen bestimmten Zeitraum einen Schutz bietet, weil der Wirkstoff nicht in die Oberfläche eingebettet ist. Er wird nachträglich aufgetragen und wird dann durch Reinigung oder Verschleiß wieder von der Oberfläche abgetragen.

Im besten Falle sollten die Oberflächen gar keiner Desinfizierung bedürfen, da sie per se antibakteriell oder antiviral ausgerüstet sind. Dies gilt insbesondere für Anwendungen im Gesundheitswesen wie Arztpraxen, Krankenhäuser, Altenheime, Rehaeinrichtungen usw. Ein effektiver und langanhaltender Schutz vor Bakterien oder Viren sollte daher in die dekorative Oberfläche eingebettet sein, sodass im günstigsten Fall ein permanenter Schutz gewährleistet wird. Zumal ein sich langsam verschlechternder Schutz eine Unsicherheit bezüglich der noch vorhandenen Restwirksamkeit erzeugt.

Ein Beispiel für solch einen Ansatz ist in der WO 2013/156595 A1 beschrieben. Hier wird ein oberflächenaktiver Stoff bzw. Tensid mit einem Nanomaterial versehen, wobei ein antimikrobieller Nanomaterial-Komplex gebildet wird. Als Tensid wird ein quaternäres Ammonium-Kation haltiges Tensid verwendet. Als Nanomaterial werden Silizium-Nanopartikel oder Kohlenstoffnanoröhren benannt. Der gebildete antimikrobielle Komplex wird zur Beschichtung von Oberflächen verwendet.

Die Ausstattung von Ausrüstungen wie Holzwerkstoffplatten mit einem permanenten antimikrobiellen Schutz der Oberflächen ist von Laien nur schwer bewerkstelligen, da diese in der Regel über die genauen Randbedingungen der Herstellung und der Applikation (Auftragsmengen, Auftragsbedingungen usw.) nicht informiert sind. Zudem sind die Zubereitungen, die eingesetzt werden müssen, gesundheitlich nicht unbedenklich und sollten deshalb nur von geschultem Personal angewendet werden. Außerdem führt die sich in regelmäßigen Abständen wiederholende Applikation zu Nutzungsausfällen. Diese wiederholten Applikationen führen selbstverständlich auch zu höheren Kosten.

Daraus ergeben sich verschiedene Nachteile, wie hoher Aufwand, umständliche Lösungen, permanente Kosten und Unsicherheit bezüglich Schutzfunktion.

Der vorliegenden Erfindung lag daher die technische Aufgabe zu Grunde eine Melaminharzoberfläche mit einer antiviralen Komponente auszustatten. Diese sollte in die Harzmatrix im Bereich der Oberfläche eingebettet sein. Selbstverständlich sollen durch die Zugabe des Wirkstoffes die Oberflächeneigenschaften des Produktes nicht verschlechtert werden. Auch die Herstellung der antiviralen Oberfläche soll auf den vorhandenen Anlagen möglich sein. Keinesfalls soll von der modifizierten Oberfläche eine toxische Gefährdung ausgehen, die die Einsatzmöglichkeiten in irgendeiner Weise einschränkt.

Diese Aufgabe wird erfindungsgemäß durch eine Zusammensetzung mit den Merkmalen des Anspruchs 1 gelöst.

Entsprechend wird eine Harzsuspension mit antimikrobiellen, bioziden Eigenschaften, insbesondere antiviralen Eigenschaften, für Oberflächenbeschichtungen von Papierlagen oder Holzwerkstoffplatten bereitgestellt, wobei die Harzsuspension umfasst:
- mindestens ein Formaldehyd-Harz;
- mindestens einer Verbindung der allgemeinen Formel (I)

   **R¹SiX₃** **(I),**

   wobei
   - X Alkoxy ist, und
   - R¹ ein organischer Rest ist ausgewählt aus der Gruppe umfassend C1-C10 Alkyl, die durch -O- oder -NH- unterbrochen sein können, und
   - wobei R¹ mindestens eine funktionelle Gruppe Q₁ aufweist, die ausgewählt ist aus einer Gruppe enthaltend eine Amino-, Methacryl-, Methacryloxy-, Vinyl-, und Epoxid- Gruppe,
- mindestens eine weitere Verbindung der allgemeinen Formel (II)

   **SiX₄** **(II),**

   wobei X Alkoxy ist, und
- mindestens einem antimikrobiellen Wirkstoff, insbesondere mindestens ein Biozid.

Wie oben bereits angemerkt, soll die vorliegende Zusammensetzung das Einbringen bzw. Einbetten von bioziden Wirkstoffen in eine Harzmischung bzw. Harzmatrix, wie z.B. eine Melaminharzmatrix, ermöglichen, die auf Oberflächen von Trägermaterialien wie Holzwerkstoffplatten oder Papierlagen aufgetragen werden. Für diesen Zweck umfasst die vorliegende Zusammensetzung mit der mindestens einen Silanverbindung der allgemeinen Formel (I) und optional, einer weiteren Silanverbindung der allgemeinen Formel (II) eine vernetzende, hydrophile Komponente. Die Silanverbindung der Formel (I) bindet über die funktionellen Gruppen Q1 an die Harzkomponente und den antimikrobiellen Wirkstoff. Die Silanverbindung der Formel (II) dient dem Aufbau eines SiO₂ Netzwerkes über Kondensation der OH-Gruppen, Anbindung an Melaminharz und den antimikrobiellen Wirkstoff. Der biozide Wirkstoff wird an die Silane angekoppelt. Der Komplex aus Wirkstoff und Silan kann dann fest in das Melaminharz über die während des Härtens bzw. Verpressens ablaufenden Kondensationsprozesse eingebunden werden.

Aus dem Stand der Technik ist eine solche Harzsuspension nicht bekannt. DE 10 2005 000 905 A1 betrifft eine hydrophile antibakterielle Beschichtung für Wärmetauscher und Wasserauffangwannen in Klimaanlagen. Die Schicht enthält 75-99 Gew% Maleinsäurefunktionelle Silicananopartikel und 1 bis 25 Gew% wasserunlösliche Wirkstoffe auf der Basis von Chlorbisphenolen oder Octenidin. Die Maleinsäurefunktionellen Nanopartikel werden durch Umsetzung von Maleinsäureanhydrid mit Aminoalkyltrialkoxysilanen hergestellt. Anschließend erfolgt eine Cokondensation mit weiteren Silanen, wie zum Beispiel Tetraethoxysilan, 3-Glycidoxypropyltriethoxysilan. DE 10 2006 001 641 A1 offenbart die Verwendung einer Beschichtungszusammensetzung aus einem Silan der allgemeinen Formel Z-Si(OR)₃ wobei Z 3-Glycidyloxypropyl-Rest und R ein Alkylrest sein kann. Die Beschichtung kann des Weiteren ein zweites Silan enthalten. Darüber hinaus kann ein weiterer Bestandteil der Beschichtung ein Polymer sein, wie ein Polyamid, Polyester, Epoxidharz, Melamin-Formaldehyd-Kondensat, Urethan-Polyol-Harz oder Mischungen.EP 2873523 A1 beschreibt eine Holzwerkstoffplatte mit modifizierter Oberfläche. Die Holzwerkstoffplatte umfasst eine Trägerplatte mit einer darauf angeordneten Harzschicht, gefolgt von einer Primerschicht mit einer Verbindung der allgemeinen Formel RₐSiX₄₋ₐ und einem auf der Primerschicht angeordneten Decklack mit einer Verbindung der allgemeinen Formel RₐSiX₄₋ₐ.

Nanoskalige Teilchen, die wie weiter unten beschrieben optional zugegeben werden können, ermöglichen aufgrund der großen Oberfläche von z.B. mehr als 200 m²/g eine weitere Aufnahme von Wirkstoff und eine Einbindung über OH Gruppen in die Harzmatrix.

Neben den Silanen können auch noch andere Alkoxide wie z.B. Titanisobutylat als Verbindungsmittel zwischen Harz und Wirkstoff verwendet werden, welches aber im Gegensatz zu den Silanen deutlich schneller hydrolysiert und kondensiert.

Die vorliegende Zusammensetzung kann Beschichtungs- oder Imprägierharzen, wie z.B. Melaminharzen und/oder Harnstoffharzen, zugegeben werden. Im Falle von Imprägnierharzen kann die vorliegende Zusammensetzung nach der Kernimprägnierung von Papierlagen (Dekorpapier, Overlaypapier) mit den üblicherweise verwendeten Imprägnierharzen und einer Zwischentrocknung auf die Oberseite der kernimprägnierten Papierlage (Imprägnat) aufgebracht wird. Die vorliegende Zusammensetzung kann aber auch zusammen mit einem Harz auf eine bedruckte Holzwerkstoffplatte aufgebracht werden.

Die Verwendung der vorliegenden Zusammensetzung bietet verschiedene Vorteile. So ergibt sich durch die Einbettung des Wirkstoffes in die Harzmatrix ein permanenter antimikrobieller Schutz; ein Auswaschen des Wirkstoffes ist erschwert bzw. nicht möglich. Zudem werden die Desinfektionskosten reduziert, da der Wirkstoff nur einmal in die Oberflächenschicht eingebracht wird; ein wiederholtes Auftragen eines Desinfektionsmittels kann vermieden werden.

In einer Weiterführung ist es auch möglich, dass Silan und Biozid nicht als einzelne Komponenten verwendet werden, die nach Reaktion einen Silan-Biozid-Komplex bilden, sondern dass ein bereits fertiger Silan-Biozid-Komplex wie z.B. 3-trimethoxysilylpropyldimethyloctylammoniumchlorid verwendet wird (nicht anspruchsgemäss).

Der hydrolysierbare Rest X ist vorteilhafterweise ausgewählt aus einer Gruppe enthaltend C₁₋₆-Alkoxy, insbesondere Methoxy, Ethoxy, n-Propoxy und Butoxy,. Besonders bevorzugt ist der Rest X Methoxy, Ethoxy, n-Propoxy oder i-Propoxy.

In einer besonders bevorzugten Variante der vorliegenden Harzsuspension umfasst die Verbindung der allgemeinen Formel (II) der Formel SiX₄ Methoxy, Ethoxy, n-Propoxy oder i-Propoxy, als X. Besonders bevorzugt sind die Verbindungen Tetramethoxysilan und Tetraethoxysilan als Verbindung der allgemeinen Formel (II).

Der organische Rest R¹ der Verbindung der allgemeinen Formel (I) ist bevorzugt ausgewählt aus der Gruppe enthaltend Methyl, Ethyl, n-Propyl, Isopropyl, n-Butyl, s-Butyl, t-Butyl, Pentyl, Hexyl, die durch -O- oder -NH- unterbrochen sein können Besonders bevorzugte funktionelle Gruppen Q¹ sind Glycidyloxy-, Acryl-, Vinyl. Die funktionelle Gruppe Q¹ kann vorteilhafterweise einen Rest mit einer Doppelbindung oder einer Epoxid-Gruppe aufweisen, der mittels UV-Strahlung aktivierbar und polymerisierbar ist.

Die Verbindung der allgemeinen Formel (I) umfasst erfindungsgemäß eine der folgenden Formeln : R¹SiX₃ mit R¹ als C1-C10 Alkyl-Gruppe, bevorzugt Methyl, Ethyl, Propyl, Pentyl, Hexyl, Heptyl, Octyl, unterbrochen mit-O- oder-NH-, mit Q1 als Epoxy-, Amino-, Methacryloxy- , Methaycryl-, oder Vinyl-Gruppe und mit X als Alkoxy, insbesondere Methoxy, Ethoxy, n-Propoxy oder i-Propoxy.

In einer Variante der vorliegenden Harzsuspension können Verbindungen der allgemeinen Formel (I) gemäß R¹SiX₃, mit einer funktionellen Gruppe Q¹ ausgewählt sein aus Methacryloxypropyltrimethoxysilan (MPTS), Aminoethyl-aminopropyltrimethoxysilan, Silane mit einer Epoxyfunktionalisierung wie Glycidyl-oxypropyltriethoxysilan, oder Silane mit einer Vinylfunktionalisierung wie z.B. Vinyltrimethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen.

Der Begriff "substituiert", in Verwendung mit "Alkyl", "Cycloalkyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt ein- oder zweimal, mit denselben oder unterschiedlichen Substituenten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

. Erfindungsgemäß weist die vorliegende Harzsuspension mindestens eine Verbindung der allgemeinen Formel (I) und mindestens eine Verbindung der allgemeinen Formel (II) auf. In einer Variante können aber auch mindestens zwei Verbindungen der allgemeinen Formel (I) und mindestens eine Verbindung der allgemeinen Formel (II) enthalten sein. Jegliche Kombination ist hier vorstellbar.

So kann in einer Variante die Harzsuspension Glycidyloxypropyltriethoxysilan als Verbindung der Formel (I) und Tetraethoxysilan als Verbindung der Formel (II) aufweisen. In einerweiteren Variante kann die Zusammensetzung Glycidyloxypropyltriethoxysilan als erste Verbindung der Formel (I), Aminoethylaminpropyltriethoxysilan als zweite Verbindung der Formel (I) und Tetraethoxysilan als Verbindung der Formel (II) enthalten.

Die molaren Verhältnisse der Verbindung der Formel (I) und der Formel (II) können in der Harzsuspension in einem Bereich zwischen 0,5 : 1 bis 25 : 1, bevorzugt zwischen 5 :1 und 15:1 liegen. So kann das molare Verhältnis von Glycidyloxypropyltriethoxysilan zu Tetraethoxysilan zwischen 0,8 : 1 bis 4 : 1 liegen, und das molare Verhältnis von Glycidyloxypropyltriethoxysilan zu Aminoethylaminpropyltriethoxysilan zwischen 0,7 :1 bis 2: 1 liegen.

Wie oben bereits angedeutet, handelt es sich bei dem verwendeten antimikrobiellen Wirkstoff um ein Biozid. Voraussetzung für die Auswahl eines geeigneten Biozids ist, das dieses der EU-Verordnung Nr. 528/2012 über das Inverkehrbringen von Biozid-Produkten entspricht. Biozide können entweder nach Produktarten wie Desinfektionsmittel und Schutzmittel oder nach deren Zielorganismen (Viruzide, Bakterizide, Fungizide etc.) eingeteilt werden. Vorliegend kann das mindestens eine Biozid ausgewählt sein aus einer Gruppe umfassend Benzalkoniumchlorid, Oktylammoniumchlorid, Chitosan, Phenylphenol, Kupfersulfat, Silbernitrat, Milchsäure, Nonansäure, Natriumbenzoat, 1-[[2-(2,4-dichlorophenyl)-4-propyl-1,3-dioxolan-2-yl]methyl]-1H-1,2,4-triazole, 2-octyl-2H-isothiazol-3-one, Thiazol-4-yl-1H-benzoimidazole, 3-lodo-2-propynylbutylcarbamat, Biphenyl-2-ol, Bronopol / Kalzium-Magnesiumoxid, Kupfer (II) oxid, 2-Pyridinthiol-1-oxid, Silberoxid, Silber-Kupfer-Zeolit.

Die angeführten Wirkstoffe stammen aus Produktfamilien 2 und 9, die für antiviral wirkende Fußböden bereits genehmigt sind bzw. sich in Genehmigung befinden.

Das molare Verhältnis von Silan zu Wirkstoff kann in einem Bereich zwischen 100 : 1 bis 5 : 1 liegen.

In einer weiteren Ausführungsform kann die vorliegende Zusammensetzung anorganische Partikel, insbesondere Nanopartikel auf der Basis von SiO₂, wie Kieselgele oder Zeolithe, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel kann die Menge an aufgenommenen Wirkstoff weiter erhöht werden.

Das Massenverhältnis zwischen Oxid aus Alkoxiden und Oxid aus zusätzlichen Nanopartikel beträgt von 1,4 : über 1,26 : 1 bis 1 : 2,3. Typische Kieselgele sind Kieselsole wie Levasil 200 B 30, CS 30 716P, CS 20 516P. Diese Kieselsole weisen eine Depotwirkung auf und können somit die Wirksamkeit verbessern.

Wie oben bereits angedeutet, kann in einer noch weiteren Ausführungsform vorgesehen sein, der vorliegenden Zusammensetzung mindestens ein weiteres Alkoxid, insbesondere mindestens ein Alkoxytitanat, wie Tetraisopropylorthotitanat (Titanisopropylat) oder Tetraisobutylorthotitanat (Titanisobutylat), zuzugeben. Diese dienen als weitere Verbindungsmittel zwischen Harz und Wirkstoff, welche aber im Falle der Alkoxytitanate im Gegensatz zu den Silanen deutlich schneller hydrolysieren und kondensieren. Gleichzeitig erhöht es die Kondensationsrate des gesamten Systems, so dass ein Entfernen des Alkohols einfacher möglich ist und somit rein wässrige Systeme zugänglich sind.

Das Massenverhältnis zwischen Oxid aus Alkoxiden und Oxid aus zusätzlichen Nanopartikel beträgt von 1,4 : über 1,26 : 1 bis 1 : 2,3.Das Verhältnis Silan zu weiterem Alkoxid liegt bei 30:1, bevorzugt bei 26,6 : 1.

Die vorliegende Zusammensetzung wird bevorzugt in wässriger Form verwendet, wobei kein Alkohol oder eine geringe Menge an Alkohol enthalten sein kann.

Im Falle einer wässrigen Zusammensetzung kann diese in einem Verfahren umfassend die folgenden Schritte hergestellt werden:
- Bereitstellen von einer wässrigen Suspension enthaltend mindestens eine Verbindung der allgemeinen Formel (I), und mindestens eine Verbindung der allgemeinen Formel (II);
- Zugabe von mindestens einem Katalysator, insbesondere einer Säure, zu der Suspension aus mindestens einer Verbindung der Formel (I) und mindestens einer Verbindung der Formel (II);
- Erwärmen des Gemisches;
- Zugabe von mindestens einem antimikrobiellen Wirkstoff und ggf. Erwärmen der Msichung;
- ggfs. Abtrennen der gebildeten alkoholischen Phase (z.B. durch Verdampfen) von der wässrigen Phase des Gemisches aus mindestens einer Verbindung der Formel (I), mindestens einer Verbindung der Formel (II), und dem mindestens einem antimikrobiellen Wirkstoff.

Als Katalysator geeignete anorganische und/oder organische Säuren sind ausgewählt aus einer Gruppe enthaltend Phosphorsäure, Essigsäure, p-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

In dem Fall, dass anorganische Nanopartikel, wie z.B. Kieselsol, der Zusammensetzung zugemischt werden, werden diese bevorzugt zusammen mit dem Wirkstoff zugegeben. In einer Variante kann der Wirkstoff aber auch zeitversetzt zum Kieselsol, z.B. nach dem Kieselsol zugegeben werden.

Die so hergestellte wässrige Suspension der Zusammensetzung ist stabil und kann als Additiv in wässrige Harze aller Art, z.B. Formaldehydharze wie Melaminharze, eingerührt werden und zur Erzeugung einer antimikrobiellen Oberfläche verwendet werden.

Es ist aber auch möglich, dass die einzelnen Komponenten der Zusammensetzung direkt in das Harz eingemischt werden; d.h. in diesem Fall liegt die Zusammensetzung nicht als separates Additiv vor, sondern wird vielmehr in situ im Harz hergestellt.

In diesem Falle wird die Harzsuspensionin situ wie folgt hergestellt:
- Vorlegen einer Harzsuspension, insbesondere einer Formaldehyd-Harz-Suspension wie einem Melaminformaldehydharz;
- Zugabe von einer wässrigen Suspension enthaltend mindestens eine Verbindung der allgemeinen Formel (I), und mindestens eine Verbindung der allgemeinen Formel (II);
- Zugabe von mindestens einem Katalysator, insbesondere einer Säure, zu der Suspension aus mindestens einer Verbindung der Formel (I) und mindestens einer Verbindung der Formel (II);
- Erwärmen des Gemisches;
- Zugabe von mindestens einem antimikrobiellen Wirkstoff und ggf. von anorganischen Nanopartikeln, wie Kieselsol;
- weiteres Erwärmen der Mischung bis das modifizierte Harz erhalten wurde.

Nach Zugabe der antimikrobiellen Zusammensetzung als Additiv zu einem Harz oder aufgrund der in situ-Herstellung in einem vorgelegten Harz, wird demnach eine Harzsuspension, insbesondere auf der Basis eines Formaldehyd-Harzes bereitgestellt, die antimikrobielle Eigenschaften aufweist.

Die Menge des dem Harz zugegebenen Wirkstoffs bzw. Biozids wird so eingestellt, dass die Harzsuspension zwischen 1 bis 5 Gew%, bevorzugt zwischen 2 bis 3 Gew% Biozid bezogen auf das Festharz aufweist.

Diese antimikrobiell wirksame Harzsuspension kann zur Beschichtung von Trägermaterialien, insbesondere von Papierlagen, wie Dekor- oder Overlaypapierlagen, oder insbesondere von Holzwerkstoffplatten, wie mitteldichten Faser (MDF)-, hochdichten Faser (HDF)- oder Grobspan (OSB)-Platten, Sperrholzplatten oder eine Kunststoff-Komposit-Platten (WPC) oder Stein-Kunststoff-Komposit-Platten (SPC) verwendet werden.

Der Auftrag der Harzsuspension auf eine Holzwerkstoffplatte erfolgt typischerweise mittels Walzen, und der Auftrag der Harzsuspension auf eine Papierlage mittels eines Rasterwerks.

Wie bereits erwähnt, kann die vorliegende Zusammensetzung auf eine Papierlage aufgetragen werden, wobei bereits imprägnierte Papierlagen (Imprägnate) besonders bevorzugt sind. Vorliegend ist unter dem Begriff der "Imprägnierung" eine vollständige oder teilweise Durchtränkung der Papierlage mit dem Harz zu verstehen. Derartige Imprägnierungen können z.B. in einem Imprägnierbad, durch Walzen, durch Rasterwalzen, durch Aufrakeln oder auch durch Besprühen aufgebracht werden.

Als Papierlagen kommen z.B. Overlay-, Dekor-, oder Kraftpapiere zum Einsatz. Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen. Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein. Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

Die Papierlagen werden in zwei Stufen imprägniert. Dabei erfolgt zunächst eine Kernimprägnierung mit einem Standardharz (Melamin- oder Harnstoffharz oder Gemische der beiden Harze) mit Zwischentrocknung durchgeführt werden. Anschließend erfolgt z. B. in einem Rasterwerk der Auftrag eines Melaminharzes auf die Oberseite des Imprägnates mit dem entsprechenden Wirkstoff im Harz. Danach schließt sich wiederum ein Trocknungsschritt an. Anschließend wird das so vorbehandelte Imprägnat zu dem benötigten Zwischen- oder Endprodukt weiterverarbeitet. Es kann sich dabei um eine Direktbeschichtung für Möbel-, Inneneinrichtungs- oder Bodenbelagsanwendungen handeln. Es können auch Laminate hergestellt werden, die dann ebenfalls für die oben beschriebenen Anwendungen genutzt werden können.

In einer Ausführungsvariante werden die Papierlagen wie folgt behandelt: Zunächst wird die Papierlage rückseitig (z.B.in einer Tränkwanne) mit einem Harz mit einem Feststoffgehalt zwischen 50 und 70 Gew%, bevorzugt 55 Gew% imprägniert. Nach dem Durchlauf einer Atemstrecke erfolgt eine Tauchimpägnierung mit einem Harz. Das Imprägnat durchläuft dann einen Trockenkanal, wobei es auf eine Restfeuchte von 15-20 % zurückgetrocknet wurde. In einem zweiten Imprägnierschritt wird ein Harz mit einem Feststoffgehalt zwischen 50 und 70 Gew%, bevorzugt 55 Gew% enthaltend die antimikrobielle Zusammensetzung aufgetragen. Es erfolgt ein weiterer Trocknungsschritt auf eine Restfeuchte von ca. 6%. Das Imprägnat kann dann in üblicher Weise mit einer Holzwerkstoffplatte z.B. in einer Kurztaktpresse verpresst werden.

In einer anderen bevorzugten Ausführungsform wird die Harzsuspension mit der antimikrobiellen Zusammensetzung auf eine bedruckte Holzwerkstoffplatte aufgetragen.

Hierzu wird eine Holzwerkstoffplatte bzw. Trägerplatte zunächst mit einer Harzgrundierung versehen, auf welcher mindestens eine Grundierungsschicht aufgetragen wird. Die dabei bevorzugt verwendete Grundierungsschicht umfasst eine Zusammensetzung aus Kasein oder Sojaprotein als Bindemittel und anorganische Pigmente, insbesondere anorganische Farbpigmente. Als Farbpigmente können in der Grundierungsschicht weiße Pigmente wie Titandioxid verwendet werden oder aber auch weitere Farbpigmente, wie Calciumcarbonat, Bariumsulfat oder Bariumcarbonat. Die Grundierung kann neben den Farbpigmenten und dem Kasein oder Sojaprotein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann.

In einer weiteren Ausführungsvariante wird auf die Grundierung eine Primerschicht, bevorzugt als Einmalauftrag mit anschließender Trocknung, aufgebracht. Die Primerschicht ist insbesondere im Falle eines anschließenden Tiefdruckverfahrens (mit Walzen) sinnvoll, wohingegen diese bei Anwendung eines Digitaldruckverfahrens nicht zwingend erforderlich ist.

Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Als Direktdruckverfahren zum Bedrucken der Holzwerkstoffplatte werden vorteilhafterweise Tiefdruck- und Digitaldruckverfahren angewendet.

Auf die Dekorschicht werden Abdeckschichten mit oder ohne Zusätze aufgetragen, die in Menge und Zusammensetzung variieren können.

So können in einer Variante folgende Aufträge erfolgen:
- Auftragen von mindestens einer ersten Harzschicht auf die mindestens eine Dekorschicht auf der Oberseite der Holzwerkstoffplatte, wobei die erste Harzschicht einen Feststoffgehalt zwischen 60 und 80 Gew%, bevorzugt 65 Gew% aufweist und Glaskugeln als Abstandshalter enthält;
- Trocknen des Aufbaus aus erster Harzschicht und Glaskugeln in mindestens einer Trocknungsvorrichtung;
- Auftragen von mindestens einer zweiten Harzschicht auf die Oberseite und optional auf die Unterseite der Holzwerkstoffpatte, wobei die zweite Harzschicht einen Feststoffgehalt zwischen 60 und 80 Gew%, bevorzugt 65 Gew% aufweist;
- gleichmäßiges Aufstreuen von abriebfesten Partikeln auf die zweite Harzschicht auf der Oberseite der Holzwerkstoffplatte;
- anschließendes Trocknen der zweiten Harzschicht mit den abriebfesten Partikeln in mindestens einer Trocknungsvorrichtung;
- Auftragen von mindestens einer dritten und einer vierten Harzschicht, wobei die dritte einen Feststoffgehalt zwischen 50 und 70 Gew%, bevorzugt 60 Gew% aufweist,
- anschließendes Trocknen der aufgetragenen dritten Harzschicht in mindestens einer weiteren Trocknungsvorrichtung;
- Auftragen von mindestens vierten Harzschicht, wobei die vierte Harzschicht einen Feststoffgehalt zwischen 50 und 70 Gew%, bevorzugt 60 Gew% aufweist;
- anschließendes Trocknen der aufgetragenen vierten Harzschicht in mindestens einer weiteren Trocknungsvorrichtung;
- Auftragen von mindestens einer Harzsuspension mit einem Feststoffgehalt zwischen 50 und 70 Gew%, bevorzugt 55 Gew% umfassend die erfindungsgemäße antimikrobielle Zusammensetzung,
- anschließendes Trocknen der aufgetragenen Harzsuspension in mindestens einer weiteren Trocknungsvorrichtung; und
- Verpressen des Schichtaufbaus in einer Kurztaktpresse.

Wie oben ausgeführt, können Glaskugeln aufgebracht werden, die als Abstandshalter fungieren. Die bevorzugt verwendeten Glaskugeln weisen einen Durchmesser von 80-100 µm auf. Die Menge an Glaskugeln beträgt 10 bis 50 g/m², bevorzugt 10 bis 30 g/m², insbesondere bevorzugt 15 bis 25 g/m². Der Ansatz besteht bevorzugt aus ca. 40 kg Harz flüssig plus Glaskugeln und Hilfsstoffe. Die Glasperlen können ebenfalls in silanisierter Form vorliegen. Durch die Silanisierung der Glasperlen wird die Einbettung der Glasperlen in die Harzmatrix verbessert.

Wie oben ebenfalls bereits erwähnt, können auf die Holzwerkstoffplatte abriebfeste Partikel, wie z.B. Partikel aus Korund (Aluminiumoxide), Borcarbide, Siliziumdioxide, Siliziumcarbide, aufgestreut werden. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird.

Die Menge an aufgestreuten abriebfesten Partikeln beträgt 10 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 35 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA-Standard). In einer Variante werden als abriebfeste Partikel Edelkorund weiß F230 verwendet.

Die Trocknung der Harzschichten erfolgt bei Trockner-Temperaturen zwischen 150 und 220°C, bevorzugt zwischen 180 und 210°C, insbesondere in einem Konvektionstrockner. Die Temperatur wird an die jeweiligen Harzschichten angepasst und kann in den einzelnen Konvektionstrocknern variieren. Anstatt von Konvektionstrocknern können aber auch andere Trockner zum Einsatz kommen.

In dem sich an den letzten Trocknungsschritt anschließenden Pressschritt erfolgt ein Verpressen des Schichtaufbaus unter Druck- und Temperatureinfluss in einer Kurztaktpresse bei Temperaturen zwischen 150 und 250°C, bevorzugt bei 160°C und einem Druck zwischen 30 und 60 kg/cm². Die Presszeit liegt zwischen 10 bis 20 sec, bevorzugt zwischen 12 bis 14 sec.

Die Erfindung wird nachfolgend unter Bezugnahme an Ausführungsbeispielen näher erläutert.

**Ausführungsbeispiel 1:** ein erstes antimikrobielles Additiv AV-1 nicht-gemäß der Erfindung Es handelt sich hier um ein wässriges Additiv, welches in der Produktion ins Harz gemischt werden kann.

Beschreibung der Herstellung des Additivs AV-1: Vorlage von 214 g Glycidyloxypropyltriethoxysilan in einem Rührkolben. Zugabe von 9 g 10 % iger Essigsäure. Nach einer Rührzeit von 10 Minuten bei Raumtemperatur werden 10 g Titanisobutylat hinzugegeben und weitere 10 Minuten gerührt. Anschließend erfolgt eine Zugabe von 391 g Kieselsol CS 30 716P. Das Gemisch erwärmt sich durch Hydrolyse auf ca. 60 °C und wird nun auf 80 °C erwärmt und am Rückfluss gekocht. Nach ca. 50 Minuten erfolgt eine Zugabe von Benzalkoniumchlorid in Wasser (20%ige Lösung) sowie die Zugabe von 8 g Aminoethylaminopropyltriethoxysilan. Das Hydrolysat wird weitere 60 Minuten bei 80 °C unter Rückfluss gekocht. Anschließend wird das Gemisch mit weiteren 85 g Wasser verdünnt und mit Hilfe eines Rotationsverdampfers wird der bei der Hydrolyse entstehende Ethanol entfernt. Nach dem Entfernen des Alkohols hat das Gemisch einen Flammpunkt von über 85 °C. Dieses Additiv kann nun zum fertigen Melaminharz hinzugegeben werden.

**Ausführungsbeispiel 2:** ein zweites antimikrobielles Additiv AV-2 nicht-gemäß der Erfindung Es handelt sich hier um ein wässriges Additiv mit Restalkohol, welches in der Produktion ins Harz gemischt werden kann.

Beschreibung der Herstellung des Additivs AV-2: Vorlage von 59,7 g Glycidyloxypropyltriethoxysilan und 10,91 g Tetraethoxysilan in einem Rührkolben. Zugabe einer Mischung bestehend aus 30,98 g H₂O, 5 g Ethanol und 2,24 g para-Toluolsulfonsäure. Das Gemisch erwärmt sich auf ca. 55 °C und wird ca. 60 Minuten weiter gerührt. Ein Teil des bei der Hydrolyse entstehenden Alkohols wird nach 12 Stunden Standzeit mit Hilfe eines Rotationverdampfers entfernt. Das Gewicht des Gemischs wird dabei um 17 Gew. % reduziert. Zu 10 g dieses Hydrolysates werden nun weitere 10 g H₂O und 0,352 g para-Toluolsulfonsäure hinzugeben. Mit Hilfe eines Dispergier-Rührers werden nun 0,51g Chitosan in diesem Gemisch gelöst. Nach einer 10-minütigen Rührzeit wird ein transparentes, hochviskoses Additiv erhalten, welches nun zum fertigen Harz hinzugegeben werden kann.

### Ausführungsbeispiel 3: ein drittes antimikrobielles Additiv AV-3 nicht-gemäß der Erfindung

Es handelt sich hier um ein wässriges Additiv mit Restalkohol, welches in der Produktion ins Harz gemischt werden kann.

Beschreibung der Herstellung des Additivs AV-3: Vorlage von 20,0 g Glycidyloxypropyltriethoxysilan und 12,8 g Tetraethoxysilan in einem Rührkolben. Zugabe einer Mischung bestehend aus 18,1 g H₂O, 2 g Ethanol und 0,76 g para-Toluolsulfonsäure. Das Gemisch erwärmt sich auf ca. 55 °C und wird ca. 60 Minuten weiter gerührt. Unter Rückfluss wird da Gemisch nun auf 80 °C erhitzt und nach 60 Minuten werden 8,4 g Phenylphenol der Mischung hinzugegeben. Das Hydrolysat wird nun weitere 60 Minuten bei 80 °C gekocht. Ein Teil des bei der Hydrolyse entstehenden Alkohols wird nach 12 Stunden Standzeit mit Hilfe eines Rotationverdampfers entfernt. Das Gewicht des Gemischs wird dabei um 12 Gew. % reduziert. Man erhält ein transparentes Additiv, welches nun zum fertigen Harz hinzugegeben werden kann.

### Ausführungsbeispiel 4: ein viertes antimikrobielles Additiv AV-4 gemäß der Erfindung

Es handelt sich hier um ein Additiv, welches im Harz (in situ) hergestellt wird und daher nicht als eigenständiges Additiv verwendet werden kann.

Beschreibung der Herstellung des Additivs AV-4: Vorlage von 215 g Melaminharz (Lieferung aus Heiligengrabe) in einem Rührkolben. Zugabe einer Mischung bestehend aus: 8,0 g Glycidyloxypropyltriethoxysilan, 7,1 g Tetraethoxysilan sowie 5,2 g Aminoethylaminopropyltriethoxysilan sowie einer Mischung bestehend aus 12,2 g H₂O, 0,44 g para-Toluolsulfonsäure. Das Gemisch wird auf ca. 45 g erwärmt und 60 Minuten weiter gerührt. Anschließend wird nun 2,91 g Kupfersulfat und 9,8 g Kieselsol CS 20 516 P hinzugegeben und weitere 12 Stunden gerührt. Man erhält ein transluzentes, leicht bläuliches modifiziertes Harz.

### Ausführungsbeispiel 5: ein fünftes antimikrobielles Additiv AV-5 gemäß der Erfindung

Es handelt sich hier um ein Additiv, welches im Harz (in situ) hergestellt wird und daher nicht als eigenständiges Additiv versendet werden kann.

Beschreibung der Herstellung des Additivs AV-5: Vorlage von 215 g Melaminharz (Lieferung aus Heiligengrabe) in einem Rührkolben. Zugabe einer Mischung bestehend aus: 8,0 g Glycidyloxypropyltriethoxysilan, 7,1 g Tetraethoxysilan sowie 5,2 g Aminoethylaminopropyltriethoxysilan sowie einer Mischung bestehend aus 12,2 g H₂O, 0,44 g para-Toluolsulfonsäure. Das Gemisch wird auf ca. 45 g erwärmt und 60 Minuten weiter gerührt. Anschließend wird nun 1,99 g Kupfersulfat und 9,8 g Kieselsol 200 B 30 hinzugegeben und weitere 12 Stunden gerührt. Man erhält ein transluzentes, leicht gräulich modifiziertes Harz.

### Ausführungsbeispiel 6: ein sechstes antimikrobielles Additiv AV-6 gemäß der Erfindung

Es handelt sich hier um ein Additiv, welches im Harz (in situ) hergestellt wird und daher nicht als eigenständiges Additiv versendet werden kann.

Beschreibung der Herstellung des Additivs AV-6: Vorlage von 215 g Melaminharz (Lieferung aus Heiligengrabe) in einem Rührkolben. Zugabe einer Mischung bestehend aus: 8,0 g Glycidyloxypropyltriethoxysilan, 7,1 g Tetraethoxysilan sowie 10,4 g Aminoethylaminopropyltriethoxysilan sowie einer Mischung bestehend aus 12,2 g H₂O, 0,44 g para-Toluolsulfonsäure. Das Gemisch wird auf ca. 45 g erwärmt und 60 Minuten weiter gerührt. Anschließend wird nun 5,82 g Kupfersulfat und 22,1 g Kieselsol CS 20 516 P hinzugegeben und weitere 24 Stunden gerührt. Man erhält ein transluzentes, leicht bläuliches modifiziertes Harz.

### Ausführungsbeispiel 7: Aufbringen der erfindungsgemäßen Zusammensetzung auf ein Dekorpapier

An einem Imprägnierkanal wurde ein Dekorpapier (Flächengewicht: 70 g/m², Breite: 2070 mm) in einem ersten Imprägnierschritt mit einem wässrigen Melaminharz (Feststoffgehalt: 55 Gew%) in einer Menge von 130 g/m² imprägniert. Die Produktionsgeschwindigkeit lag dabei bei 50 m/min. In dem Melaminharz waren die üblichen Hilfsstoffe (Härter, Netzmittel, Entschäumer usw.) enthalten.

Das Imprägnat hat dann einen Trockenkanal durchlaufen, wobei es auf eine Restfeuchte von 15 - 20 % zurückgetrocknet wurde.

Danach wurden in einem zweiten Imprägnierschritt mit Hilfe einer Rasterwalze 40 g Melaminharz fl./m² aufgetragen. Dieses Harz enthielt 2 Gew% antiviralen Wirkstoff auf Festharz. Das Melaminharz hatte einen Feststoffgehalt von ca. 55 Gew%.

Das Imprägnat wird anschließend wieder in einem Schwebetrockner getrocknet. Dabei wird auf eine Restfeuchte von 5,5 - 6,0 Gew% getrocknet. Das Imprägnat wird dann auf Format geschnitten (2,8 bzw.5,6 x 2,07 m) bzw. aufgerollt. Anschließend wurden Formate in einer Kurztaktpresse auf Spanplatten aufgepresst, wobei eine Nullprobe ohne Wirkstoff in der Oberfläche mitgeprüft wurde. Die Pressparameter waren: Pressdruck 40 kg/cm², Presstemperatur: 190°C, Presszeit: 15 sec.

An den beschichteten Platten wurden die üblichen Prüfungen, die im Rahmen der Qualitätssicherung festgelegt sind, durchgeführt.

| Prüfung* | Nullprobe | Variante 1 | Variante 2 | Variante 3 | Variante 4 | Variante 5 | Variante 6 |
|---|---|---|---|---|---|---|---|
| Säuretest** | Stufe 1 | Stufe 1 | Stufe 1 | Stufe 1 | Stufe 1 | Stufe 1 | Stufe 1 |
| Kratztest | Grad 3 | Grad 3 | Grad 3 | Grad 3 | Grad 4 | Grad 4 | Grad 4 |
| Wasserdampftest | o. B | o. B. | o. B. | o. B. | o. B. | o. B. | o. B. |
| Fleckenunempfindlichkeit | Stufe 4 | Stufe 4 | Stufe 4 | Stufe 5 | Stufe 4 | Stufe 5 | Stufe 5 |
| | | | | | | | |

| | | | | | | | |
|---|---|---|---|---|---|---|---|
| *Die Prüfungen wurden außer dem Säuretest gemäß der DIN EN 14323- 2017-07 durchgeführt ** Stufe 1: ohne Befund, Stufe 2: leichte Veränderung von Glanzgrad und/oder Farbe Stufe 3: starke Veränderung von Glanzgrad und/oder Farbe | | | | | | | |

Wie aus der Tabelle zu entnehmen ist, wurden keine Auffälligkeiten gefunden.

Muster aus der Produktion wurden einem Prüflabor geschickt, um dort die "Prüfung von Flächengebilden und Materialien auf antivirale Aktivität mit einem unbehüllten Prüfvirus" durchführen zu lassen.

Dabei zeigte sich bei allen Prüfmustern bei der Prüfung in Anlehnung an Vorgaben der ISO 21702:2019-05 "Messung von antiviraler Aktivität auf Kunststoff- und anderen nicht-porösen Oberflächen" ein Wert der antiviralen Wirkung A (log10 PFU) von >3 (ISO 18184:2014-09 Anhang G). Damit wird bei allen Prüfmustern eine signifikante Reduktion erreicht.

### Ausführungsbeispiel 8: Aufbringen der erfindungsgemäßen Zusammensetzung auf ein Overlay

An einem Imprägnierkanal wurde ein Overlay (Flächengewicht: 25 g/m², Breite: 2070 mm) in einem ersten Imprägnierschritt mit einem wässrigen Melaminharz (Feststoffgehalt: 55 Gew%) in einer Menge von 135 g/m² imprägniert. Die Produktionsgeschwindigkeit lag dabei bei 50 m/min. In dem Melaminharz waren die üblichen Hilfsstoffe (Härter, Netzmittel, Entschäumer usw.) enthalten.

Das Imprägnat hat dann einen Trockenkanal durchlaufen, wobei es auf eine Restfeuchte von 15 - 20 % zurückgetrocknet wurde.

Danach wurden in einem zweiten Imprägnierschritt mit Hilfe einer Rasterwalze 40 g Melaminharz fl./m² aufgetragen. Dieses Harz enthielt 2 Gew% antiviralen Wirkstoff auf Festharz. Das Melaminharz hatte einen Feststoffgehalt von ca. 55 Gew%.

Das Imprägnat wird anschließend wieder in einem Schwebetrockner getrocknet. Dabei wird auf eine Restfeuchte von 5,5 - 6,0 Gew% getrocknet. Das Imprägnat wird dann auf Format geschnitten (2,8 bzw.5,6 x 2,07 m) bzw. aufgerollt. Anschließend wurden Formate in einer Durchlaufpresse zu einem Schichtstoff verpresst. Dabei wurde folgender Aufbau verwendet:
- Overlayimprägnat mit antiviralem Wirkstoff (siehe oben)
- Dekorimprägnat (Papiergewicht: 70 g/m², Harzauftrag: 100 Gew% Melaminharz, VC-Wert: 5,6-6,0%)
- Unterlagsimprägnat NKP (Papiergewicht: 160 g/m², Harzauftrag: ca. 85 Gew% Mischharz, Zukauf)
- Pergament (Papiergewicht: 50 g/m² )

Die Pressparameter waren: Vorschub: 8 m/min, Pressdruck 80 kg/cm², Presstemperatur: 190°C.

Das Laminat wurde anschließend auf eine 38 mm Spanplatte aufgeklebt (Klebstoff: Harnstoff-Formaldehyd-Leim), die einseitig mit einem Arbeitsplattenprofil versehen war und dann der Laminatüberstand um das beleimte Profil in einer Postforming-Straße verformt und angepresst wurde.

Das Laminat kann auch für vertikale Anwendungen genutzt werden. Dabei kann statt des Overlays ein Dekorimprägnat mit antiviraler Ausrüstung verwendet werden.

### Ausführungsbeispiel 9: Aufbringen der erfindungsgemäßen Zusammensetzung auf ein Overlay

An einem Imprägnierkanal wurde ein Overlay (Flächengewicht: 25 g/m², Breite: 2070 mm) in einem ersten Imprägnierschritt mit einem wässrigen Melaminharz (Feststoffgehalt: 55 Gew%) in einer Menge von 135 g/m² imprägniert. Die Produktionsgeschwindigkeit lag dabei bei 50 m/min. In dem Melaminharz waren die üblichen Hilfsstoffe (Härter, Netzmittel, Entschäumer usw.) enthalten. Nach dem Harzauftrag wird mit einer Streuvorrichtung Korund auf die Oberseite des Overlays aufgestreut. Es handelte sich dabei um F 230 (FEPA-Standard). Die Auftragsmenge lag bei 20 g/m².

Das Imprägnat hat dann einen Trockenkanal durchlaufen, wobei es auf eine Restfeuchte von 15 - 20 % zurückgetrocknet wurde.

Danach wurden in einem zweiten Imprägnierschritt mit Hilfe einer Rasterwalze 40 g Melaminharz fl./m² auf die Rückseite des Overlays aufgetragen. Dieses Harz enthielt 2 Gew% antiviralen Wirkstoff auf Festharz. Das Melaminharz hatte einen Feststoffgehalt von ca. 55 Gew%.

Das Imprägnat wird anschließend wieder in einem Schwebetrockner getrocknet. Dabei wird auf eine Restfeuchte von 5,5 - 6,0 Gew% getrocknet. Das Imprägnat wird dann auf Format geschnitten (2,8 bzw.5,6 x 2,07 m) bzw. aufgerollt. Anschließend wurden die Formate in einer Kurztaktpresse zu einem Fussbodenaufbau für einen Laminatboden verpresst. Dabei wurde folgender Aufbau verwendet:
- Overlayimprägnat mit antiviralem Wirkstoff (siehe oben)
- Dekorimprägnat (Harzauftrag: 100 Gew% Melaminharz, VC-Wert: 5,6-6,0%)
- HDF, 8 mm
- Gegenzugimprägnat (Papiergewicht: 80 g/m², Harzauftrag: 120 Gew%)

Die Pressparameter waren: Pressdruck40 kg/cm², Presstemperatur: 190°C, Presszeit: 12 sec.

Das Overlay kann auch für einen Aufbau zur Herstellung von Fussboden verwendet werden, bei dem die HDF direktbedruckt worden ist. Dort wird dann statt des letzten Harzauftrages mit dem antiviralen Wirkstoff das Overlay verwendet.

### Ausführungsbeispiel 10: Aufbringen der erfindungsgemäßen Zusammensetzung auf eine Holzwerkstoffplatte

Eine HDF (Format: 2800 x 2070 x 7 mm) wird in einer Direktdrucklinie zunächst mit einem Melaminharz grundiert (Auftragsmenge: ca. 20 g Melaminharz fl./m², Feststoffgehalt: ca. 65 Gew.%). Das Harz wird in einem Umlufttrockner getrocknet und anschließend eine Farbgrundierung aufgetragen, die aus Titandioxid und Kasein besteht. Diese Farbgrundierung wird bis zu sieben Mal aufgetragen. Dabei liegt die Auftragsmenge bei 5 - 10 g Grundierung fl./Auftragswerk. Es wird jeweils nach jedem Auftrag eine Zwischentrocknung mit Hilfe von einem Umluft und/oder IR-Trockner durchgeführt. Danach wird ein Primer aufgetragen (Auftragsmenge 10 - 20 g fl/ m²). Dieser wird ebenfalls getrocknet. Auf diesen Primer wird dann im Tiefdruck- oder Digitaldruckverfahren ein Dekor aufgedruckt.

Anschließend wird eine Abdeckschicht aus Melaminharz aufgetragen (Auftragsmenge: 10 - 30 g Melaminharz fl./ m², Feststoffgehalt: 65 Gew%). Das Melaminharz enthält Glaskugeln (Durchmesser Glaskugeln: 80 - 100 µm, Auftragsmenge: 5 g Glaskugeln/m²) als Abstandshalter. Die Platten durchlaufen wiederum einen Trockner. Danach werden sie in einem Paternoster abgekühlt.

Die Platten werden dann an einer Produktionslinie auf der Oberseite mit Melaminharz (Auftragsmenge: 60 g Melaminharz fl./m², Feststoff: 65 Gew%.) beschichtet. Gleichzeitig wird auf der Rückseite ein Melaminharz als Gegenzug in der gleichen Menge ebenfalls mit Hilfe einer Walze aufgetragen. Dann erfolgt das Aufstreuen von Korund auf die Oberseite der Platte (Auftragsmenge: 20 g Korund/m², Korngröße: F230 nach FEPA-Standard). Der Aufbau wird in einem Trockner mit Hilfe von IR-Strahlern oder Umluft getrocknet. Anschließend werden noch zweimal 30 g Melaminharz fl./m² (Feststoffgehalt: 60 Gew%) mit Hilfe von Walzenauftragsaggregaten aufgetragen. Nach jedem Auftrag folgt eine Zwischentrocknung.

In einem letzten Walzenauftragswerk wurden mit Hilfe einer Rasterwalze 40 g Melaminharz fl./m² aufgetragen. Dieses Harz enthielt 2 Gew% antiviralen Wirkstoff auf Festharz. Das Melaminharz hatte einen Feststoffgehalt von ca. 55 Gew%.

Die Platten werden in einem Umlufttrockner getrocknet. Die Platten werden dann in einer Legestation mit einem Gegenzugimprägnat gelegt und dann in eine Kurztaktpresse transferiert. Dort wird der Aufbau dann bei T=180°C, p=30 kg/cm² und t=14 sec verpresst. Es wurde ein Pressblech mit einer Büttenstruktur verwendet.

## Patentansprüche

1. Harzsuspension mit antimikrobiellen Eigenschaften, insbesondere antiviralen Eigenschaften, für Oberflächenbeschichtungen von Papierlagen oder Holzwerkstoffplatten umfassend
- mindestens ein Formaldehyd-Harz;
- mindestens eine Verbindung der allgemeinen Formel (I)
**R¹SiX₃** **(I),**
wobei
- X Alkoxy ist, und
- R¹ ein organischer Rest ist ausgewählt aus der Gruppe umfassend C1-C10 Alkyl, die durch -O- oder -NH- unterbrochen sein können, und
- wobei R¹ mindestens eine funktionelle Gruppe Q¹ aufweist, die ausgewählt ist aus einer Gruppe enthaltend eine Amino-, Methacryl-, Methacryloxy-, Vinyl-, und Epoxid- Gruppe,
- mindestens eine weitere Verbindung der allgemeinen Formel (II)
**SiX₄** **(II),**
wobei X Alkoxy ist, und
- mindestens einen antimikrobiellen Wirkstoff, insbesondere mindestens ein Biozid.

2. Harzsuspension nach einem der vorhergehenden Ansprüche, **dadurch gekennzeichnet, dass** X ausgewählt ist aus einer Gruppe enthaltend C₁₋₆-Alkoxy.

3. Harzsuspension nach einem der vorhergehenden Ansprüche, **dadurch gekennzeichnet, dass** X Methoxy, Ethoxy, n-Propoxy,i-Propoxy oder Butoxy ist.

4. Harzsuspension nach einem der vorhergehenden Ansprüche, **dadurch gekennzeichnet, dass** R¹ der Verbindung der allgemeinen Formel (I) ausgewählt ist aus einer Gruppe umfassend Methyl, Ethyl, Propyl, Pentyl, Hexyl, Heptyl, Octyl, die durch -O- oder -NH- unterbrochen sein können.

5. Harzsuspension nach einem der vorhergehenden Ansprüche, **dadurch gekennzeichnet, dass** die mindestens eine funktionelle Gruppe Q¹ der Verbindung der allgemeinen Formel (I) ausgewählt ist aus einer Gruppe enthaltend Epoxid-, Amino-, und Vinyl -Gruppe.

6. Harzsuspension nach einem der vorhergehenden Ansprüche, **dadurch gekennzeichnet, dass** die mindesten eine funktionelle Gruppe Q1 eine Glycidyloxy-, Alkylamino-, Amino-, Aminoalkylamino-, bevorzugt Aminoethylamino-, und/oder Vinyl-Gruppe ist.

7. Harzsuspension nach einem der vorhergehenden Ansprüche, **gekennzeichnet durch** mindestens eine Verbindung der allgemeinen Formel (I) und mindestens eine Verbindung der allgemeinen Formel (II) oder mindestens zwei Verbindungen der allgemeinen Formel (I) und mindestens eine Verbindung der allgemeinen Formel (II).

8. Harzsuspension nach einem der vorhergehenden Ansprüche, **dadurch gekennzeichnet, dass** das mindestens eine Biozid ausgewählt ist aus einer Gruppe umfassend Desinfektionsmittel und Schutzmittel ausgewählt aus Benzalkoniumchlorid, Chitosan, Phenylphenol, Kupfersulfat.

9. Harzsuspension nach einem der vorhergehenden Ansprüche, **gekennzeichnet durch** anorganische Partikel, insbesondere Nanopartikel, bevorzugt auf der Basis von SiO₂ (Kieselsol, Zeolithe).

10. Harzsuspension nach einem der vorhergehenden Ansprüche, **gekennzeichnet durch** mindestens ein weiteres Alkoxid, insbesondere mindestens ein Alkoxytitanat wie Tetraisopropylorthotitanat (Titanisopropylat) oder Tetraisobutylorthotitanat (Titanisobutylat).

11. Harzsuspension nach einem der vorhergehenden Ansprüche umfassend ein Melamin-Formaldehyd-Harz.

12. Verwendung einer Harzsuspension nach einem der vorhergehenden Ansprüche zur Beschichtung von Papierlagen, wie Dekorpapierlagen oder Overlaypapierlagen, oder von Holzwerkstoffplatten, wie mitteldichten Faser (MDF)-, hochdichten Faser (HDF)- oder Grobspan (OSB)-Platten, Sperrholzplatten oder eine Kunststoff-Komposit-Platten (WPC), oder von Stein-Kunststoff-Komposit-Platten (SPC).

13. Holzwerkstoffplatte beschichtet mit mindestens einer Harzsuspension nach einem der Ansprüche 1 bis 11.

14. Papierlage, bevorzugt Dekorpapierlage oder Overlaypapierlage, beschichtet mit mindestens einer Harzsuspension nach einem der Ansprüche 1 bis 11.

## Claims

1. Resin suspension with antimicrobial properties, in particular antiviral properties, for surface coatings of paper layers or wood-based panels comprising
- at least one formaldehyde resin;
- at least one compound of the general formula (I)
**R¹ SiX₃** **(I),**
where
- X alkoxy is, and
- R¹ is an organic moiety selected from the group comprising C1-C10 alkyl which may be interrupted by -O- or -NH-, and
- wherein R¹ has at least one functional moiety Q¹ selected from a group containing an amino, methacrylic, methacryloxy, vinyl and epoxy moiety,
- at least one further compound of the general formula (II)
**SiX₄** **(II),**
where X is alkoxy, and
- at least one antimicrobial agent, in particular at least one biocide.

2. Resin suspension according to any one of the preceding claims, **characterised in that** X is selected from a group containing C₁₋₆ -alkoxy.

3. Resin suspension according to any one of the preceding claims, **characterised in that** X is methoxy, ethoxy, n-propoxy, i-propoxy or butoxy.

4. Resin suspension according to any one of the preceding claims, **characterised in that** R¹ of the compound of general formula (I) is selected from a group comprising methyl, ethyl, propyl, pentyl, hexyl, heptyl, octyl, which may be interrupted by -O- or -NH-.

5. Resin suspension according to any one of the preceding claims, **characterized in that** the at least one functional moiety Q¹ of the compound of the general formula (I) is selected from a group containing epoxy, amino and vinyl moiety.

6. Resin suspension according to any one of the preceding claims, **characterized in that** the at least one functional moiety Q1 is a glycidyloxy, alkylamino, amino, aminoalkylamino, preferably aminoethylamino, and/or vinyl moiety.

7. Resin suspension according to any one of the preceding claims, **characterized by** at least one compound of the general formula (I) and at least one compound of the general formula (II) or at least two compounds of the general formula (I) and at least one compound of the general formula (II).

8. A resin suspension according to any one of the preceding claims, **characterised in that** the at least one biocide is selected from a group comprising disinfectants and protectants selected from benzalkonium chloride, chitosan, phenylphenol, copper sulphate.

9. Resin suspension according to any one of the preceding claims, **characterised by** inorganic particles, in particular nanoparticles, preferably based on SiO₂ (silica sol, zeolites).

10. Resin suspension according to any one of the preceding claims, **characterised by** at least one further alkoxide, in particular at least one alkoxy titanate such as tetraisopropyl orthotitanate (titanium isopropylate) or tetraisobutyl orthotitanate (titanium isobutylate).

11. A resin suspension according to any one of the preceding claims comprising a melamine-formaldehyde resin.

12. Use of a resin suspension according to any one of the preceding claims for coating paper layers, such as decorative paper layers or overlay paper layers, or wood-based panels, such as medium-density fibre (MDF), high-density fibre (HDF) or rough particleboard (OSB) panels, plywood panels or a plastic composite panel (WPC), or stone-plastic composite panels (SPC).

13. Wood-based panel coated with at least one resin suspension according to any one of claims 1 to 11.

14. Paper layer, preferably decorative paper layer or overlay paper layer, coated with at least one resin suspension according to any of claims 1 to 11.

## Revendications

1. Suspension de résine avec des propriétés antimicrobiennes, en particulier des propriétés antivirales, pour des revêtements de surface de couches de papier ou de panneaux en matériau dérivé du bois comprenant
- au moins une résine formaldéhyde ;
- au moins un composé de formule générale (I)
R¹SiX₃ (I),
dans laquelle
- X est alcoxy, et
- R¹ est un radical organique sélectionné dans le groupe comprenant C1-C10-alkyle, qui peuvent être interrompus par -O- ou -NH-, et
- dans laquelle R¹ présente au moins un groupe fonctionnel Q₁, qui est sélectionné dans un groupe contenant un groupe amino, méthacryle, méthacryloxy, vinyle, et époxyde,
- au moins un autre composé de formule générale (II)
SiX₄ (II),
dans laquelle X est alcoxy, et
- au moins un principe actif antimicrobien, en particulier au moins un biocide.

2. Suspension de résine selon l'une quelconque des revendications précédentes, **caractérisée en ce que** X est sélectionné dans un groupe contenant C₁₋₆-alcoxy.

3. Suspension de résine selon l'une quelconque des revendications précédentes, **caractérisée en ce que** X est méthoxy, éthoxy, n-propoxy, i-propoxy ou butoxy.

4. Suspension de résine selon l'une quelconque des revendications précédentes, **caractérisée en ce que** R¹ du composé de formule générale (I) est sélectionné dans un groupe comprenant méthyle, éthyle, propyle, pentyle, hexyle, heptyle, octyle, qui peuvent être interrompus par -O- ou -NH-.

5. Suspension de résine selon l'une quelconque des revendications précédentes, **caractérisée en ce que** le au moins un groupe fonctionnel Q¹ du composé de formule générale (I) est sélectionné dans un groupe contenant le groupe époxyde, amino et vinyle.

6. Suspension de résine selon l'une quelconque des revendications précédentes, **caractérisée en ce que** le au moins un groupe fonctionnel Q1 est un groupe glycidyloxy, alkylamino, amino, aminoalkylamino, de préférence aminoéthylamino, et/ou vinyle.

7. Suspension de résine selon l'une quelconque des revendications précédentes, **caractérisée par** au moins un composé de formule générale (I) et au moins un composé de formule générale (II) ou au moins deux composés de formule générale (I) et au moins un composé de formule générale (II).

8. Suspension de résine selon l'une quelconque des revendications précédentes, **caractérisée en ce que** le au moins un biocide est sélectionné dans un groupe comprenant des désinfectants et agents protecteurs sélectionnés parmi le chlorure de benzalkonium, chitosane, phénylphénole, sulfate de cuivre.

9. Suspension de résine selon l'une quelconque des revendications précédentes, **caractérisée par** des particules anorganiques, en particulier des nanoparticules, de préférence à base de SiO₂ (sol de silice, zéolithe).

10. Suspension de résine selon l'une quelconque des revendications précédentes, **caractérisée par** au moins un autre alcoxyde, en particulier au moins un alcoxytitanate tel que le tétraisopropylorthotitanate (titanisopropylate) ou tétraisobutylorthotitanate (titanisobutylate).

11. Suspension de résine selon l'une quelconque des revendications précédentes comprenant une résine mélamine-formaldéhyde.

12. Utilisation d'une suspension de résine selon l'une quelconque des revendications précédentes pour le revêtement de couches de papier, telles que des couches de papier décoratif ou couches de papier overlay, ou de panneaux en matériau dérivé du bois, tels que des panneaux de fibres moyenne densité (MDF), de fibres haute densité (HDF) ou de lamelles orientées (OSB), panneaux de contreplaqué ou un panneau de composite plastique (WPC), ou de panneaux de composite pierre-plastique (SPC).

13. Panneau en matériau dérivé du bois revêtu avec au moins une suspension de résine selon l'une quelconque des revendications 1 à 11.

14. Couche de papier, de préférence couche de papier décoratif ou couche de papier overlay, revêtue avec au moins une suspension de résine selon l'une quelconque des revendications 1 à 11.
